# EUROPEAN PATENT APPLICATION

(11) **EP 3 360 712 A1**
(43) Date of publication of application: **15.08.2018**
(21) Application number: 17210951.4
(22) Date of filing: 28.12.2017
(51) Int. Cl.: B60K 15/03

(54) **VEHICLE FUEL TANK**

(30) Priority: 10.01.2017 JP 2017002188
(71) Applicant: TOYOTA JIDOSHA KABUSHIKI KAISHA, Toyota-shi, Aichi-ken 471-8571 (JP)
(72) Inventor: AMANO, Shinsuke, Aichi-ken 471-8571 (JP); NAGASE, Yuuki, Aichi-ken 471-8510 (JP); ASAHARA, Toshiaki, Aichi-ken 471-8510 (JP)
(74) Representative: J A Kemp

(57) **Abstract**

A vehicle fuel tank (10) includes: a fuel tank body (12) including a first wall (14) and a second wall (18) facing the first wall (14); and a support column member (20) disposed in the inside of the fuel tank body (12) and extending from the first wall (14) to the second wall (18). The first wall (14) includes a first projection (32) projecting toward an inside of the fuel tank body (12). A first end of the support column member (20) in a longitudinal direction of the support column member (20) is welded to the first projection (32). A second end of the support column member (20) in the longitudinal direction is welded to the second wall (18). The support column member (20) includes a first deformation-start portion (36) located at a position closer to the first projection (32) than to a center of the support column member (20) in the longitudinal direction.

## Description

### BACKGROUND OF THE INVENTION

### 1. Field of the Invention

The present invention relates to a vehicle fuel tank.

### 2. Description of Related Art

US Patent No. 6338420 discloses a vehicle fuel tank. This vehicle fuel tank is composed of resin, and in an inside of the vehicle fuel tank, there is provided a support column member whose both longitudinal ends are respectively joined to a pair of wall portions facing each other in the vehicle-vertical direction. Each of the longitudinal ends of this support column member is formed with a deformable absorber, and the deformable absorbers absorb deformation in the vehicle-vertical direction (the axial direction of the support column member). Through this, when the wall portions of the vehicle fuel tank become deformed in the vehicle-vertical direction because of a thermal expansion of evaporated fuel generated from fuel in the vehicle fuel tank, deformation of the vehicle fuel tank is suppressed, while load applied on joined parts between the support column member and the wall portions is reduced.

### SUMMARY OF THE INVENTION

In the vehicle fuel tank disclosed in US Patent No. 6338420, projecting portions thereof are configured to absorb the deformation in the vehicle-vertical direction; thus, when stress along the horizontal direction occurs at the time of deformation of the vehicle fuel tank, this stress cannot be absorbed by the projecting portions, so that the stress might be concentrated on the joined parts between the wall portions of the vehicle fuel tank and the support column member. Hence, the above related art still has room for improvement in this point.

The present invention provides a vehicle fuel tank capable of suppressing deformation of the fuel tank, while suppressing stress concentration on joined parts between wall portions and a support column member.

A vehicle fuel tank according to one aspect of the present invention includes: a fuel tank body including a first wall and a second wall facing the first wall; and a support column member disposed in the inside of the fuel tank body and extending from the first wall to the second wall. The first wall includes a first projection projecting toward an inside of the fuel tank body. A first end of the support column member in a longitudinal direction of the support column member is welded to the first projection. A second end of the support column member in the longitudinal direction is welded to the second wall. The support column member includes a first deformation-start portion located at a position closer to the first projection than to a center of the support column member in the longitudinal direction.

In the above aspect, the second wall may include a second projection. The second end of the support column member in the longitudinal direction may be welded to the second projection. The support column member may include a second deformation-start portion located at a position closer to the second projection than to the center of the support column member in the longitudinal direction.

According to the above aspect, the pair of projections projecting toward the inside of the fuel tank body is provided on at least one pair of wall portions facing each other of the fuel tank body. Inside the fuel tank body, there is provided the support column member in such a manner that the support column member extends from one wall to the other wall, while ends thereof in the longitudinal direction are respectively welded to the pair of projections. Accordingly, by connecting the wall portions facing each other by the support column member, it is possible to suppress the wall portions of the fuel tank body from being greatly deformed when evaporated fuel inside the fuel tank body expands due to temperature.

Here, the support column member is provided with the deformation-start portions at respective positions closer to the pair of projections than to the center of the support column member in the longitudinal direction. That is, the deformation-start portions are provided on the support column member in vicinities of the pair of projections, and thus it is possible to concentrate the stress on the deformation-start portions rather than on the joined parts between the support column member and the projections at the wall portions at the moment when the wall portions of the fuel tank body are about to be deformed. Accordingly, by absorbing the stress by the deformation-start portions, it is possible to suppress the stress concentration on the joined parts between the support column member and the projections as well as on the wall portions of the fuel tank.

Accordingly, in the above aspect, it is possible to suppress deformation of the fuel tank body, while suppressing the stress concentration on the joined parts between the wall portions and the support column member.

In the above aspect, multiple sets each of which is composed of the first projection, the second projection, and the support column member may be disposed inside the fuel tank body.

According to the above configuration, since the multiple sets of the projections and the support column members, each set including the pair of projections and the support column member, are provided inside the fuel tank body, it is possible to reduce amount of deformation of the entire fuel tank due to expansion of evaporated fuel inside the fuel tank, while suppressing the stress concentration on the joined parts between the support column members and the projections.

Accordingly, according to the above configuration, there is an excellent effect to stabilize the outer shape of the tank.

In the above aspect, the support column member may be formed in a substantially cylindrical shape and may include an enlarged-diameter portion whose diameter becomes gradually greater from the first deformation-start portion toward the first end. The first projection may include: a side wall portion projecting in substantially parallel to an axial direction of the support column member; and a bottom wall portion provided at an end of the side wall portion, the first end being welded to the bottom wall portion. An angle of inclination of a wall portion of the enlarged-diameter portion relative to the axial direction may be smaller than an angle between the side wall portion and the bottom wall portion.

According to the above configuration, the support column member is formed in a substantially cylindrical shape, and has the enlarged-diameter portions, each formed such that the diameter becomes gradually greater from the deformation-start portion toward the longitudinal end; therefore, at the time of deformation of the fuel tank body, it is possible to concentrate the stress on the deformation-start portions of the support column member even when the stress acts in various directions. Furthermore, the enlarged-diameter portions are provided, to thereby more securely concentrate the stress on the deformation-start portions.

In the meantime, each projection includes a side wall portion projecting substantially along the axial direction of the support column member (hereinafter, referred to simply as an "axial direction") and a bottom wall portion provided at the front end of the side wall portion, the longitudinal end of the support column member being welded to the bottom wall portion. The angle of inclination of the wall portion of the enlarged-diameter portion relative to the axial direction is defined to be smaller than the angle between the side wall portion and the bottom wall portion of the projection; therefore, the projection has a higher rigidity than that of the support column member. That is, it becomes easier to concentrate the stress on the deformation-start portions that are the ends of the enlarged-diameter portions of the support column member rather than on the projections. Accordingly, it is possible to concentrate stress not on the projections formed at the wall portions of the fuel tank but on the deformation-start portions of the support column member.

Accordingly, according to the above configuration, it is possible to suppress deformation of the fuel tank body, while suppressing the stress concentration on the joined parts between the wall portions and the support column member.

Here, the "angle of inclination of the wall portion of the enlarged-diameter portion relative to the axial direction of the support column member" denotes an outer angle in the axial direction in an angle defined between an imaginary line along the axial direction and the wall portion of the enlarged-diameter portion. In addition, the "angle between the side wall portion and the bottom wall portion of the projection" denotes an outer angle of the fuel tank in an angle defined by the side wall portion and the bottom wall portion.

In the above aspect, the angle of inclination of the wall portion of the enlarged-diameter portion relative to the axial direction may be between 30° to 80°, and the angle between the side wall portion and the bottom wall portion may be between 90° to 135°.

According to the above configuration, the angle of inclination of the wall portion of the enlarged-diameter portion relative to the axial direction is defined to be within a range of 30° to 80°, while the angle between the side wall portion and the bottom wall portion of the projection is defined to be within a range of 90° to 135°. That is, the angle of inclination of the wall portion of the enlarged-diameter portion relative to the axial direction is defined to be smaller than the angle between the side wall portion and the bottom wall portion of the projection; thus, it is possible to concentrate the stress not on the projections formed at the wall portions of the fuel tank, but on the deformation-start portions in the vicinities of the enlarged-diameter portions of the support column member.

Accordingly, according to the above configuration, it is possible to suppress the deformation of the fuel tank body, while more specifically suppressing the stress concentration on the joined parts between the wall portions and the support column member.

In the above aspect, the fuel tank may include an additional support column member provided inside the fuel tank body and having the same diameter as a diameter of the support column member. The fuel tank body may include a third wall extending in substantially parallel to the axial direction of the support column member. An axial direction of the additional support column member may be substantially the same as the axial direction of the support column member. The additional support column member may be disposed at a position farther apart from the third wall of the fuel tank body than the support column member is. An angle of a wall portion of an enlarged-diameter portion of the additional support column member relative to the axial direction of the additional support column member may be smaller than an angle of the wall portion of the enlarged-diameter portion of the support column member relative to the axial direction of the support column member.

According to the above configuration, of the multiple support column members having the same diameters that are provided inside the fuel tank, the support column member disposed at a position farther apart from the wall portion disposed to extend in substantially parallel to the axial direction in the fuel tank (hereinafter, referred to as a "tank center") has a smaller angle than the angle of the wall portion of the enlarged-diameter portion relative to the axial direction of each of the other support column member. That is, each longitudinal end of the support column member at the tank center, the longitudinal end being welded to the projection, has a smaller diameter than the diameter of the longitudinal end of each of the other support column member. In accordance with this, the projections of the fuel tank body can be smaller, and thus arrangement flexibility of the support column member disposed at the tank center becomes enhanced.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1A is a plan view showing a state of a vehicle fuel tank according to a first embodiment, as viewed from above of the vehicle;
FIG. 1B is a sectional view showing a state taken along line IB-IB of FIG. 1A;
FIG. 2 is an enlarged sectional view showing a major part of the vehicle fuel tank according to the first embodiment;
FIG. 3 is an enlarged sectional view showing a part Z in FIG. 2;
FIG. 4A is an enlarged sectional view showing a state taken along line IVA-IVA in FIG. 1A;
FIG. 4B is an enlarged sectional view showing a state in which evaporated fuel in the vehicle fuel tank expands, with respect to FIG. 4A;
FIG. 5A is a schematic sectional view showing a deformation range of wall portions of the vehicle fuel tank according to the first embodiment;
FIG. 5B is a schematic sectional view showing a deformation range of the wall portions of the vehicle fuel tank according to a comparative example;
FIG. 6A is an enlarged sectional view showing a state of the vehicle fuel tank according to a variation of the first embodiment, the state taken along the vehicle-vertical direction;
FIG. 6B is an enlarged sectional view showing a state in which the evaporated fuel in the vehicle fuel tank expands, with respect to FIG. 6A;
FIG. 7A is a vehicle-front view showing a support column member disposed at a position other than a tank center in FIG. 6A;
FIG. 7B is a vehicle-front view showing the support column member disposed at the tank center in FIG. 6A;
FIG. 8 is an enlarged sectional view showing a state in which a major part of the support column member of the vehicle fuel tank according to a second embodiment is taken along the vehicle-vertical direction;
FIG. 9 is an enlarged sectional view showing a state in which a major part of the support column member of the vehicle fuel tank according to a third embodiment is taken along the vehicle-vertical direction; and
FIG. 10 is an enlarged sectional view showing a state in which the major part of the support column member of the vehicle fuel tank according to a fourth embodiment is taken along the vehicle-vertical direction.

### DETAILED DESCRIPTION OF EMBODIMENTS

### (First embodiment)

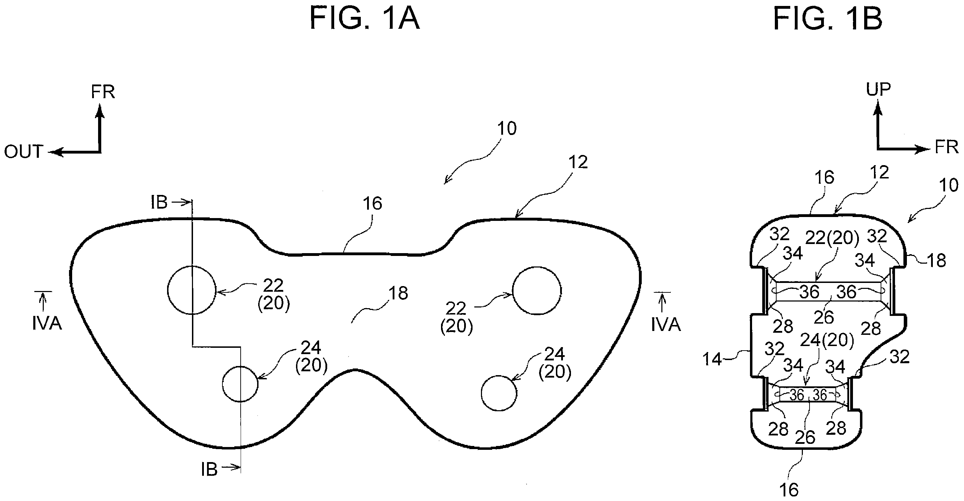

Hereinafter, with reference to FIG. 1A to FIG. 5B, the first embodiment of a vehicle fuel tank (hereinafter, referred to as a "fuel tank") 10 according to the present invention will be described. In each of these drawings, an arrow FR indicates a vehicle-longitudinal direction, an arrow OUT indicates an outward direction in the vehicle-width direction, and an arrow UP indicates an upward direction in the vehicle-vertical direction, respectively.

As shown in FIG. 1A and FIG. 1B, the fuel tank 10 has a fuel tank body 12 formed in a substantially box-like shape by multiple wall portions. Specifically, the fuel tank body 12 includes a bottom wall 14 as a wall portion extending in the vehicle-width direction, a side wall 16 as a wall portion extending from an outer edge of the bottom wall 14 in the vehicle-upward direction, and a top wall 18 as a wall portion provided at a vehicle-upper end of the side wall 16.

There are provided support column members 20 inside the fuel tank body 12. Support column members 20 include a pair of right and left first support column members 22 arranged at vehicle-frontward positions and a pair of right and left second support column members 24 arranged at vehicle-rearward positions. The first support column members 22 and the second support column members 24 basically have the same structure, and have different lengths in the vehicle-vertical direction in accordance with dimensions of the vehicle-vertical direction inside the fuel tank body 12. Hence, the structure of each first support column member 22 will be mainly described in the following description.

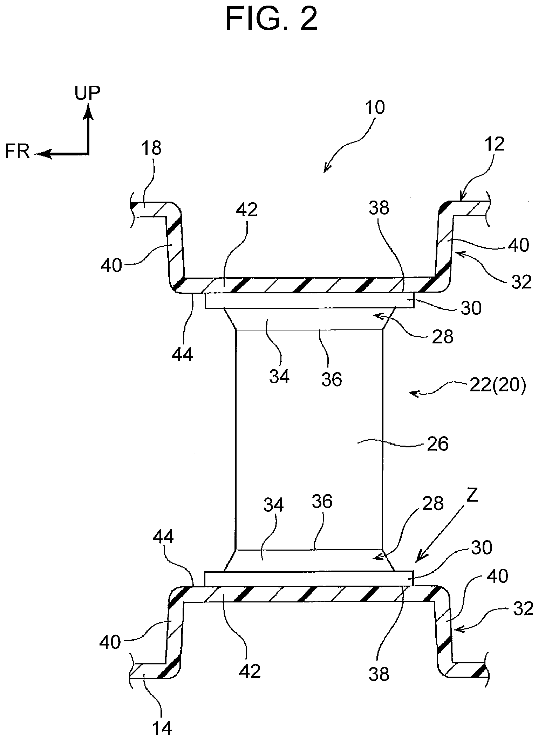

As shown in FIG. 2, the first support column member 22 is disposed to extend from the top wall 18 to the bottom wall 14 facing the top wall 18 of the fuel tank body 12. This means that the first support column member 22 is disposed to extend in the vehicle-vertical direction. The first support column member 22 is formed in a substantially cylindrical shape, and includes a support-column intermediate portion 26, enlarged-diameter portions 28, and flange portions 30. The support-column intermediate portion 26 is formed in a cylindrical shape having an axial direction in the vehicle-vertical direction.

Each enlarged-diameter portion 28 is composed by an inclined wall portion 34 as a wall portion of the enlarged-diameter portion 28, the inclined wall portion 34 formed in such a manner that a diameter thereof becomes gradually greater from the both ends in the axial direction of the support-column intermediate portion 26 toward the axially outward direction (toward projections 32 as described later). A boundary portion between the inclined wall portion 34 as well as the enlarged-diameter portion 28 and the support-column intermediate portion 26, that is, each axial end of the support-column intermediate portion 26 is referred to as a deformation-start portion 36.

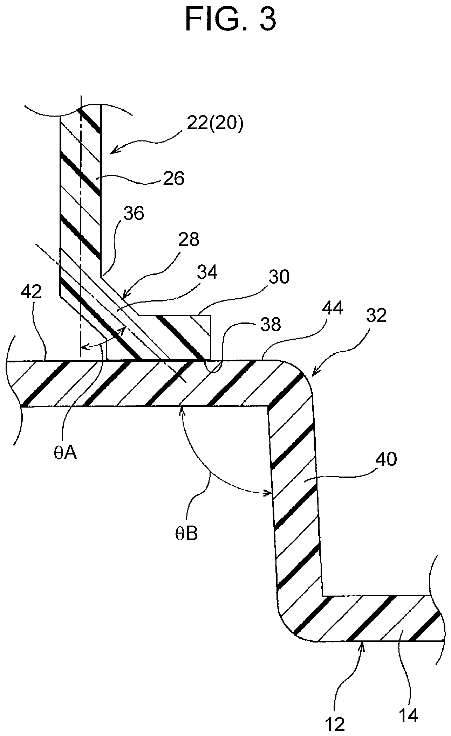

The flange portion 30 is provided to extend from the end in the axial direction of the enlarged-diameter portion 28 along substantially the horizontal direction in the radially outward direction (also see FIG. 3), and an outer surface 38 located at an axially outward position of the flange portion 30 is welded to the corresponding projection 32 described later.

The top wall 18 and the bottom wall 14, which are a pair of wall portions of the fuel tank body 12 that face each other, are provided with a pair of projections 32 projecting toward the inside of the fuel tank body 12. Each of the projections 32 is formed in a bottomed cylindrical shape defined by a side wall portion 40 projecting toward the inside of the fuel tank 10 along substantially the axial direction and a bottom wall portion 42 provided at an inner end of the side wall portion 40 in the fuel tank body 12 in a manner as to extend in the horizontal direction. As described above, the flange portion 30 of the first support column member 22 is welded to an inner surface 44 located axially inward of the bottom wall portion 42.

As shown in FIG. 3, an angle of inclination θA of the inclined wall portion 34 of the enlarged-diameter portion 28 relative to the axial direction is defined to be smaller than an angle θB between the side wall portion 40 and the bottom wall portion 42 of the projection 32. This angle of inclination θA is defined within a range of 30° to 80°, and the angle θB is defined to be 90° to 135°. With the above configuration, the deformation-start portions 36 of the first support column member 22, that is, of the support column member 20 are disposed at positions closer to the pair of projections 32 than to the center in the longitudinal direction (the axial direction) of the support column member. This deformation-start portion 36 is configured to become broken when a stress of a predetermined value or more is applied thereto.

### (Operation and effect of first embodiment)

Next, operation and effect of the present embodiment will be described.

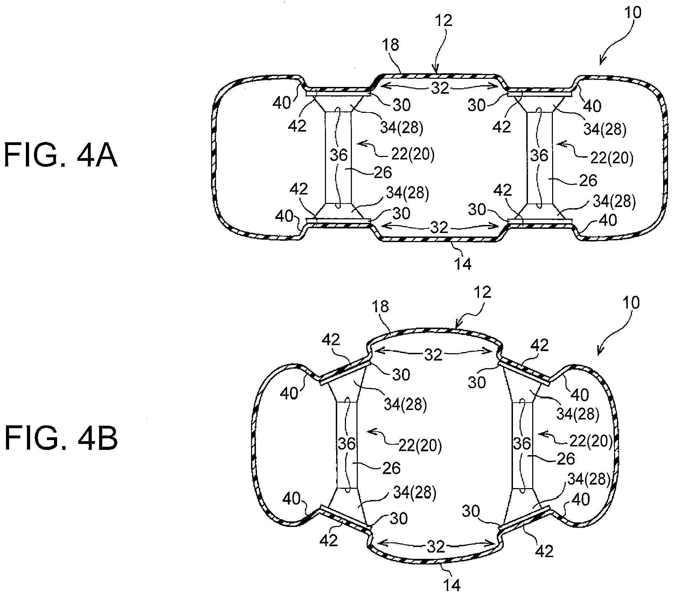

In the present embodiment, as shown in FIG. 2 and FIG. 4A, the pair of projections 32 projecting toward the inside of the fuel tank body 12 are provided respectively to the top wall 18 and the bottom wall 14 of the fuel tank body 12 that face each other. Inside the fuel tank body 12, there are provided the support column members 20 that extend from the top wall 18 to the bottom wall 14, while the flange portions 30 at the longitudinal ends of the support column members 20 are welded to the corresponding projections 32. Hence, as shown in FIG. 4B, by connecting the top wall 18 and the bottom wall 14 to each other by the support column members 20, it is possible to suppress the wall portions of the fuel tank body 12 from being greatly deformed when evaporated fuel inside the fuel tank body 12 expands due to temperature.

Here, the support column member 20 is provided with the deformation-start portions 36 disposed at respective positions closer to the pair of projections 32 than to the longitudinal center of the support column member. That is, the deformation-start portions 36 are provided on the support column member 20 in vicinities of the pair of projections 32, and thus it is possible to concentrate the stress on the deformation-start portions 36 rather than on the joined parts between the support column member 20 and the projections 32 at the wall portions at the moment when the top wall 18 and the bottom wall 14 of the fuel tank body 12 are about to be deformed. Accordingly, the deformation-start portions 36 are deformed so as to absorb the stress, to thereby suppress stress concentration not only on the joined parts between the support column member 20 and the projections 32 but also on the top wall 18 and the bottom wall 14 of the fuel tank body 12, thus suppressing occurrence of cracks or the like in the fuel tank body 12 side. Accordingly, it is possible to suppress deformation of the fuel tank body while suppressing the stress concentration on the joined parts between the projections 32 and the support column member 20.

Inside the fuel tank body 12, since there are provided multiple sets of the projections 32 and the support column members 20, each set including the pair of projections 32 and the support column member 20, it is possible to reduce amount of deformation of the entire fuel tank body 12 due to expansion of the evaporated fuel inside the fuel tank body 12, while suppressing the stress concentration on the joined parts between the support column members 20 and the projections 32. Through this, it is possible to stabilize the outer shape of the fuel tank body 12.

In addition, the support column member 20 is formed in a substantially cylindrical shape, and has the enlarged-diameter portions 28, each composed by the inclined wall portion 34 formed such that the diameter becomes gradually greater from the deformation-start portion 36 toward the flange portion 30; therefore, at the time of deformation of the fuel tank body 12, it is possible to concentrate the stress on the deformation-start portions 36 of the support column member 20 even when the stress acts in various directions. Furthermore, the enlarged-diameter portions 28 composed by the inclined wall portions 34 are provided, to thereby more securely concentrate the stress on the deformation-start portions 36.

In the meantime, each projection 32 includes the side wall portion 40 projecting generally along the axial direction, and the bottom wall portion 42 provided at the front end of the side wall portion 40, the corresponding flange portion 30 of the support column member 20 being welded to the bottom wall portion 42. The angle of inclination θA of the inclined wall portion 34 relative to the axial direction is defined within a range of 30° to 80°, while the angle θB between the side wall portion 40 and the bottom wall portion 42 of the projection 32 is defined within a range of 90° to 135° (see FIG. 3). That is, the angle of inclination θA of the inclined wall portion 34 relative to the axial direction is defined to be smaller than the angle θB between the side wall portion 40 and the bottom wall portion 42 of the projection 32. Hence, the bending rigidity of the projection 32 becomes greater than that of the enlarged-diameter portion 28 composed by the inclined wall portion 34. Therefore, because the projection 32 itself becomes more difficult to be deformed, the bottom wall portion 42 of the projection 32 is inclined in a planar state at the time of deformation of the fuel tank body 12; thus, it is possible to concentrate more stress on the deformation-start portion 36 located in the vicinity of the enlarged-diameter portion 28 of the support column member 20 welded to the bottom wall portion 42. Accordingly, stress concentration on the joined parts between the projections 32 and the support column members 20 can be more specifically suppressed so as to suppress the deformation.

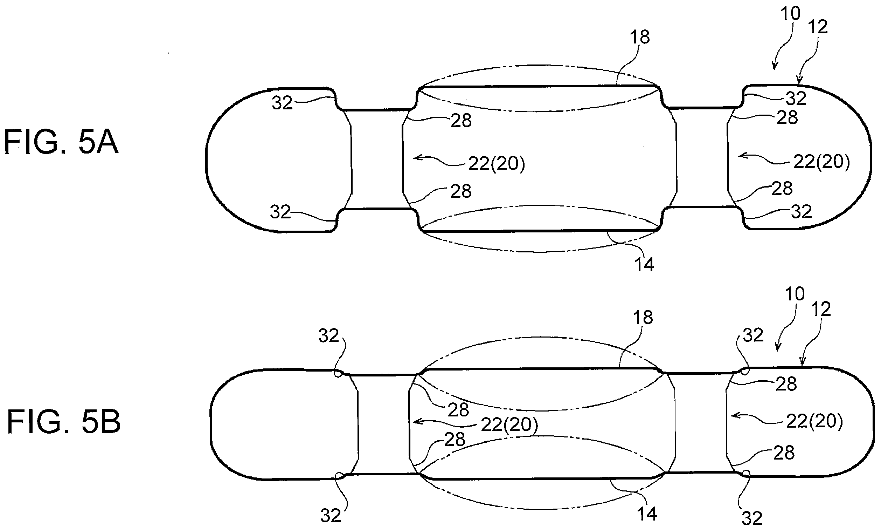

As shown in FIG. 5B, if the angle θB between the side wall portion 40 and the bottom wall portion 42 of the projection 32 is defined to be 135° or more, as one example, the bending rigidity of the projection 32 becomes deteriorated, and thus the top wall 18 and the bottom wall 14 of the fuel tank body 12 in addition to the side wall portion 40 become more easily deformed (see a two-dot chain line in the drawing). To the contrary, as shown in FIG. 5A, the angle θB between the side wall portion 40 and the bottom wall portion 42 of the projection 32 is defined within the range of 90° to 135°, to thereby enhance the bending rigidity of the projection 32; therefore, the top wall 18 and the bottom wall 14 of the fuel tank body 12 can be deformed within a range except for the projections 32 (see a two-dot chain line in the drawing). Specifically, in the present embodiment, the deformation range where the top wall 18 and the bottom wall 14 of the fuel tank body 12 are deformed becomes smaller, thus suppressing amount of deformation.

### (Variation of first embodiment)

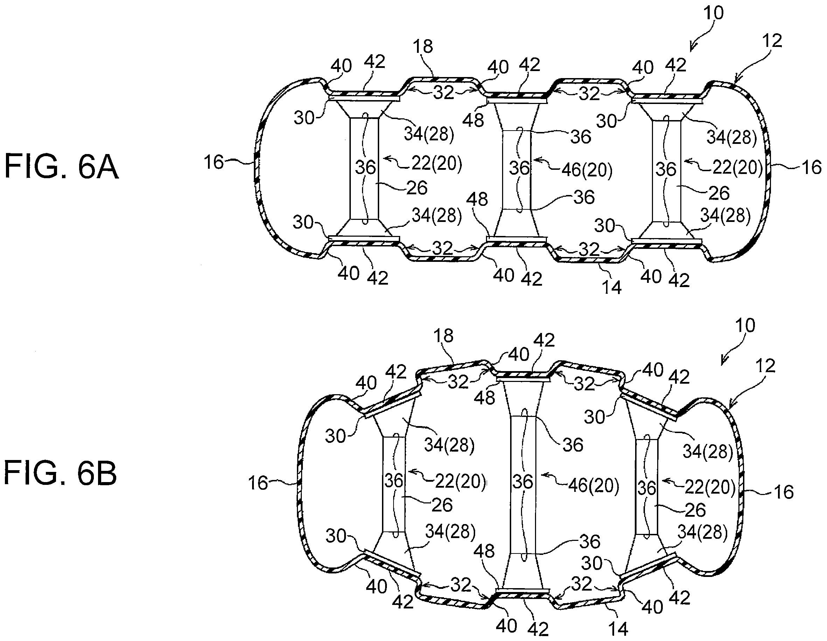

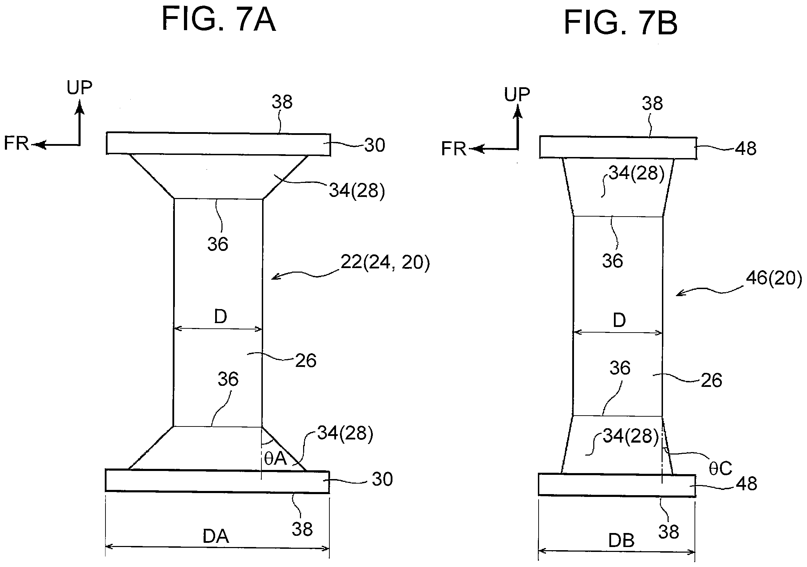

In the present embodiment, the support column members 20 are configured to include the pair of right and left first support column members 22 at the respective frontward positions of the vehicle, and the pair of right and left second support column members 24 at the respective backward positions of the vehicle; however, the support column members 20 are not limited to this arrangement, and as shown in FIG. 6A, it may be configured that a third support column member 46 having the same diameter D as that of the first support column member 22 or the second support column member 24 is provided between the pair of right and left first support column members 22 as well as between the pair of right and left second support column members 24 (i.e. at the tank center of the fuel tank body 12). As shown in FIG. 7B, the third support column member 46 is configured such that an angle of inclination θC of the inclined wall portion 34 relative to the axial direction is smaller than the angle of inclination θA of each of the first support column member 22 and the second support column member 24 (see FIG. 7A) relative to the axial direction. That is, a diameter DB of a flange portion 48 of the third support column member 46, which is located at the tank center and is welded to the projection 32, is smaller than a diameter DA of the flange portion 30 of each of the first support column member 22 and the second support column member 24. In accordance with this, the projections 32 of the fuel tank body 12 can be smaller (see FIG. 6A), and thus arrangement flexibility of the third support column member 46 located at the tank center becomes enhanced. Accordingly, it is possible to enhance designing flexibility.

The third support column member 46 has the deformation-start portions 36 that are disposed more axially inward than those of the first support column member 22 and the second support column member 24; however, as shown in FIG. 6B, since the respective tank centers of the top wall 18 and the bottom wall 14 of the fuel tank body 12 are far apart from the side wall 16 provided in substantially parallel to the axial direction, the tank centers of the top wall 18 and the bottom wall 14 become deformed in substantially the perpendicular direction to the plane when evaporated fuel inside the fuel tank body 12 expands. This means that stress along the axial direction is inputted into the third support column member 46 disposed at the tank center, and thus tensile deformation is caused to the entire third support column member 46. Accordingly, in the third support column member 46, even if each deformation-start portion 36 is disposed at a position a little farther apart from the projection 32, compared with those of the first support column member 22 and the second support column member 24, the stress is concentrated on the deformation-start portion 36; thus, it is possible to suppress the stress concentration on the joined parts between the third support column member 46 and the projections as well as on the top wall 18 and the bottom wall 14 of the fuel tank body 12.

### (Second embodiment)

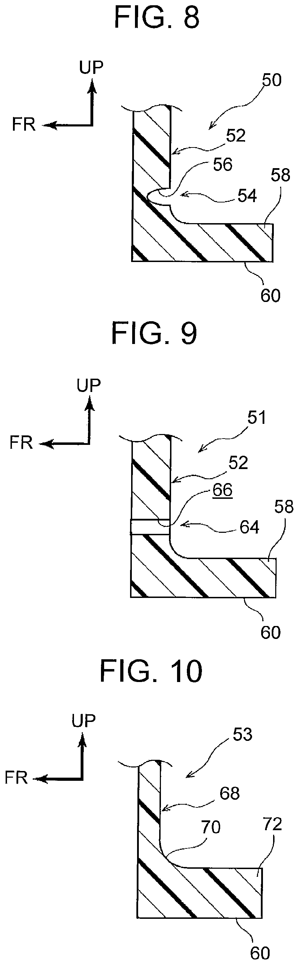

Next, with reference to FIG. 8, a vehicle fuel tank 50 according to the second embodiment of the present invention will be described. Note that structural portions that are the same as those in the above-described first embodiment are denoted by the same numbers, and description thereof will be omitted.

As shown in FIG. 8, a vehicle fuel tank 50 according to the second embodiment basically has the same configuration as that of the first embodiment, and is characterized in that each deformation-start portion 54 provided on a support column member 52 is composed by a cutout 56.

That is, the support column member 52 is formed in a cylindrical shape whose axial direction extends in the vehicle-vertical direction, and both ends thereof in the axial direction are formed with flange portions 58, each welded to the corresponding projection 32 (see FIG. 2) and having substantially the same plate thickness as the plate thickness of the support column member 52.

The flange portion 58 is formed to extend from an axial end of the support column member 52 in substantially the horizontal direction, and an outer surface 60 in the axially outward direction of the flange portion 58 is welded to the corresponding projection 32.

The respective deformation-start portions 54 are provided at vicinities of the pair of flange portions 58 provided on the ends of the support column member 52 in the vehicle-vertical direction. Each deformation-start portion 54 is composed by a cutout 56 formed in a recess shape recessed radially inward of the support column member 52. This cutout 56 is formed in the circumferential direction of the support column member 52.

### (Operation and effect of second embodiment)

Next, operation and effect of the present embodiment will be described.

Also with the above configuration, each deformation-start portion 54 provided on the support column member 52 has the same configuration as that of the vehicle fuel tank 10 of the first embodiment except that each deformation-start portion 54 is composed by the cutout 56; therefore, the same effect as that of the first embodiment can be attained.

Since each deformation-start portion 54 is composed by the cutout 56, it is possible to easily adjust the position of the deformation-start portion 54. By adjusting the depth of the cutout 56, it is possible to adjust easiness of the deformation.

### (Third embodiment)

With reference to FIG. 9, a vehicle fuel tank 51 according to the third embodiment of the present invention will be described. Note that structural portions that are the same as those in the above-described first and second embodiments are denoted by the same numbers, and description thereof will be omitted.

As shown in FIG. 9, the vehicle fuel tank 51 according to this third embodiment basically has the same configuration as that of the second embodiment, and is characterized in that each deformation-start portion 64 provided on the support column member 52 is composed by through-holes 66.

That is, the deformation-start portion 64 is provided at a vicinity of each of the flange portions 58 of the support column member 52. This deformation-start portion 64 is composed by the through-holes 66, each formed to be a round hole extending through the support column member 52, as viewed in the radial direction of the support column member 52. The multiple through-holes 66 are provided with intervals in the radial direction of the support column member 52.

### (Operation and effect of third embodiment)

Next, operation and effect of the present embodiment will be described.

Also with the above configuration, each deformation-start portion 64 provided on the support column member 52 has the same configuration as that of the vehicle fuel tank 50 of the second embodiment except that each deformation-start portion 64 is composed by the through-holes 66; therefore, the same effect as that of the second embodiment can be attained.

In the present embodiment, each through-hole 66 is formed to be a round hole as viewed in the radial direction of the support column member 52, but is not limited to this, and may be formed in another shape such as a long hole as viewed in the radial direction.

### (Fourth embodiment)

Next, with reference to FIG. 10, a vehicle fuel tank 53 according to the fourth embodiment of the present invention will be described. Note that structural portions that are the same as those in the above-described first and second embodiments are denoted by the same numbers, and description thereof will be omitted.

As shown in FIG. 10, a vehicle fuel tank 53 according to the fourth embodiment basically has the same configuration as that of the second embodiment, and is characterized in that each deformation-start portion 70 provided on a support column member 68 is disposed at a boundary between the support column member 68 and each of the flange portions 72 provided on the support column member 68.

That is, the support column member 68 is formed into a cylindrical shape whose axial direction extends in the vehicle-vertical direction, and both axial ends thereof are formed with the flange portions 72 welded to the corresponding projections 32. A plate thickness of the flange portion 72 is thicker than a plate thickness of the support column member 68, so that there is a difference between the plate thickness of the support column member 68 and the plate thickness of the flange portion 72.

Each of the deformation-start portions 70 provided on the support column member 68 is disposed at the boundary between the support column member 68 and the corresponding flange portion 72. That is, the support column member 68 is configured to be a portion having a gradual change in plate thickness.

### (Operation and effect of fourth embodiment)

Next, operation and effect of the present embodiment will be described.

Also with the above configuration, the deformation-start portion 70 is configured to be the same as that of the vehicle fuel tank 50 of the second embodiment except that each deformation-start portion 70 is defined at the boundary between the support column member 68 and each corresponding flange portion 72 provided on the support column member 68; therefore, the same effect as that of the second embodiment can be attained.

In the aforementioned embodiment, each support column member 20 52, and 68 is formed into a cylindrical shape, but is not limited to this, and may be formed in another shape such as a rectangular column.

Each deformation-start portion 36, 54, 64, and 70 is configured to be broken when stress of a predetermined value or more is applied thereto, but is not limited to this, and may be configured to expand without being broken.

Furthermore, it is configured that each support column member 20, 52, and 68 is provided to extend from the top wall 18 to the bottom wall 14 of each fuel tank 10, 50, 51, and 53. However, each support column member 20, 52, and 68 is not limited to this, and may be provided to extend from the side wall 16 on one side of the fuel tank 10 to the opposite side wall 16 on the other side. In addition, each support column member 20, 52, and 68 may be provided to extend from the top wall 18 to the bottom wall 14, and also from the side wall 16 on the one side to the opposite side wall 16 on the other side.

In addition, each fuel tank 10, 50, 51, and 53 is formed in a substantially box-like shape, but is not limited to this, and may be formed in a saddle shape (a so-called saddle-type tank) formed such that a substantially center part in the vehicle-width direction of the bottom wall 14 is formed in a projecting shape projecting in the vehicle-upward direction.

In addition, in the above embodiment, the fuel tank body 12 is configured such that each of the top wall 18 and the bottom wall 14 has the projections 32, and each support column member 20 includes the deformation-start portions 36 at the both longitudinal ends of the support column member 20. However, it may be configured that only the top wall 18 is provided with the projections 32, and the support column members 20 are provided with the deformation-start portions 36 only on the top wall 18 side.

The embodiments of the present invention have been described, but the present invention is not limited to the above description, and of course it is feasible to various modifications in addition to the above description within a range not departing from the scope of the invention.

## Claims

1. A vehicle fuel tank (10) comprising:
a fuel tank body (12) including a first wall (14) and a second wall (18) facing the first wall (14), the first wall (14) includes a first projection (32) projecting toward an inside of the fuel tank body (12); and
a support column member (20) disposed in the inside of the fuel tank body (12) and extending from the first wall (14) to the second wall (18), a first end of the support column member (20) in a longitudinal direction of the support column member (20) being welded to the first projection (32), a second end of the support column member (20) in the longitudinal direction being welded to the second wall (18), the support column member (20) including a first deformation-start portion (36) located at a position closer to the first projection (32) than to a center of the support column member (20) in the longitudinal direction.

2. The vehicle fuel tank (10) according to claim 1, wherein
the second wall (18) includes a second projection, the second end of the support column member (20) in the longitudinal direction is welded to the second projection, and
the support column member (20) includes a second deformation-start portion (36) located at a position closer to the second projection than to the center of the support column member (20) in the longitudinal direction.

3. The vehicle fuel tank (10) according to claim 2, wherein
multiple sets each of which is composed of the first projection (32), the second projection, and the support column member (20) are disposed inside the fuel tank body (12).

4. The vehicle fuel tank according to any one of claims 1 to 3, wherein
the support column member (20) is formed in a substantially cylindrical shape and includes an enlarged-diameter portion (28) whose diameter becomes gradually greater from the first deformation-start portion (36) toward the first end,
the first projection (32) includes: a side wall portion (40) projecting in substantially parallel to an axial direction of the support column member (20); and a bottom wall portion (42) provided at an end of the side wall portion (40), the first end being welded to the bottom wall portion (42), and
an angle of inclination of a wall portion of the enlarged-diameter portion (28) relative to the axial direction is smaller than an angle between the side wall portion (40) and the bottom wall portion (42).

5. The vehicle fuel tank according to claim 4, wherein
the angle of inclination of the wall portion of the enlarged-diameter portion (28) relative to the axial direction is between 30° to 80°, and the angle between the side wall portion (40) and the bottom wall portion (42) is between 90° to 135°.

6. The vehicle fuel tank according to claim 4 or 5, further comprising
an additional support column member provided inside the fuel tank body (12) and having the same diameter as a diameter of the support column member (20), wherein
the fuel tank body (12) includes a third wall extending in substantially parallel to the axial direction of the support column member (20),
an axial direction of the additional support column member is substantially the same as the axial direction of the support column member (20),
the additional support column member is disposed at a position farther apart from the third wall of the fuel tank body (12) than the support column member (20) is, and
an angle of a wall portion of an enlarged-diameter portion of the additional support column member relative to the axial direction of the additional support column member, is smaller than an angle of the wall portion of the enlarged-diameter portion of the support column member (20) relative to the axial direction of the support column member (20).
